(19) 

Europäisches Patentamt
European Patent Office
Office européen des brevets

(11) **EP 1 538 018 B1**

(12) **EUROPÄISCHE PATENTSCHRIFT**

(45) Veröffentlichungstag und Bekanntmachung des Hinweises auf die Patenterteilung:
**30.07.2008 Patentblatt 2008/31**

(51) Int Cl.:
***B60K 26/02*** *(2006.01)*

(21) Anmeldenummer: **04017289.2**

(22) Anmeldetag: **22.07.2004**

(54) **Verfahren und Vorrichtung zur Einstellung der auf eine Fahrpedaleinrichtung wirkenden Rückstellkraft**

Method and device for setting the return force of a accelerator pedal

Procédé et appareil pour régler la force de rappel du pédale d'accélération

(84) Benannte Vertragsstaaten:
**DE FR GB**

(30) Priorität: **05.12.2003 DE 10356834**

(43) Veröffentlichungstag der Anmeldung:
**08.06.2005 Patentblatt 2005/23**

(73) Patentinhaber: **ROBERT BOSCH GMBH**
**70442 Stuttgart (DE)**

(72) Erfinder: **Kustosch, Mario**
**71665 Vaihingen/Enz (DE)**

(56) Entgegenhaltungen:
**DE-A1- 10 026 048        DE-A1- 19 620 929**
**US-A- 5 627 752         US-B1- 6 381 522**
**US-B1- 6 559 762**

**Beschreibung**

Die vorliegende Erfindung betrifft ein Verfahren und eine Vorrichtung zur Einstellung der auf eine Fahrpedaleinrichtung eines Kraftfahrzeugs wirkenden Rückstellkraft, wobei die Einstellung der Rückstellkraft in Abhängigkeit der momentan im Fahrzeug gespeicherten, kinetischen Energie und der berechneten, kinetischen Energie, die das Fahrzeug zum Erreichen eines, die eigene Fahrzeuggeschwindigkeit begrenzenden Hindernisses benötigt, ermittelt wird und einem Fahrpedalaktuator zugeführt wird, der entgegen der Fahrpedalbetätigung des Fahrers eine entsprechende Rückstellkraft erzeugt. Hierdurch kann dem Fahrer eine Empfehlung zu einer möglichst energiesparenden Fahrweise gegeben werden.

Stand der Technik

Aus der DE 196 20 929 A1 ist ein Längsregelsystem für Kraftfahrzeuge mit haptischem Gaspedal bekannt, das einen Geschwindigkeitsgeber, einen Abstandsgeber, einen Längsregler und ein Einstellelement zur Aufbringung einer Rückstellkraft an einem Leistungssteuerorgan aufweist. Um eine parallele Längsregelung des Fahrzeugs durch den Fahrer und ein Längsregelsystem zu ermöglichen, steuert der Längsregler das Einstellelement derart an, dass bei einer Überschreitung eines Vorgabewertes des Längsreglers eine der Abweichung proportionale Rückstellkraft erzeugt wird.

Aus der US 6,559,762 B1 ist ein Mehrkanal-Bremssystem zur Vermeidung von Kollisionen mit anderen Fahrzeugen bekannt, das ein Fahrpedal und einen Fahrpedalaktor aufweist, der eine variable Kraft auf das Fahrpedal aufbringen kann. Ein Objektdetektionssensor erkennt vorausbefindliche, Objekte und bestimmt den Abstand und die Relativgeschwindigkeit eines Zielobjekts. Eine Steuereinrichtung überwacht den relativen Abstand und die relative Geschwindigkeit und benachrichtigt den Fahrer, langsamer zu fahren. Die Fahrerbenachrichtigung wird durchgeführt, indem eine veränderbare Kraft auf das Fahrpedal aufgebracht wird, wobei die Stärke dieser aufgebrachten Kraft proportional zur Stärke der benötigten Bremsung ist.

Kern und Vorteile der Erfindung

Der Kern der vorliegenden Erfindung ist es, dem Fahrer eines Kraftfahrzeugs auf intuitive Art und Weise anzuzeigen, ob es im Rahmen einer kraftstoffsparenden Fahrweise sinnvoll ist, das Fahrpedal des Fahrzeugs zu betätigen, oder ob eine Betätigung des Fahrpedals eine nicht nutzbare Erhöhung des Kraftstoffverbrauchs darstellt. Erfindungsgemäß wird dieses durch die Merkmale der unabhängigen Ansprüche gelöst. Vorteilhafte Weiterbildungen und Ausgestaltungen ergeben sich aus den Unteransprüchen.

Im Rahmen der vorliegenden Erfindung wird der Begriff Hindernis bzw. die eigene Fahrzeuggeschwindigkeit begrenzendes Hindernis für Objekte oder Verkehrssituationen verwendet, die den Fahrer zwingen, seine Fahrzeuggeschwindigkeit auf einen bestimmten Maximalwert zu begrenzen. Dabei kann beispielsweise gemeint sein eine Geschwindigkeitsbegrenzung, deren Geltungsbereich in einer Datenbank eines Navigationssystems mit dem entsprechenden Maximalgeschwindigkeitswert hinterlegt ist, oder eine Verkehrsampel, vor der der Fahrer anhalten muss, wodurch die Maximalgeschwindigkeit des Fahrzeugs zu vziel = 0 vorgegeben wird. Weiterhin ist es möglich, scharfe Kurven mittels der Datenbank des Navigationssystems zu erkennen und in der Datenbank Maximalgeschwindigkeiten zu hinterlegen, mit denen die entsprechende Kurve durchfahren werden darf. Weiterhin kann es vorgesehen sein, Kreuzungen mit den entsprechenden Verkehrsregelungen zu hinterlegen, beispielsweise indem für die einzelnen Kreuzungsstraßen die aufgestellten Verkehrsschilder wie "Vorfahrtsstraße" oder "Stop" hinterlegt sind. Weiterhin kann das die eigene Fahrzeuggeschwindigkeit begrenzende Hindernis ein vorausfahrendes, langsameres Fahrzeug sein, das mittels eines Objektsensors einer Umfelderfassungseinrichtung, erkannt wird. Hierzu eignet sich beispielsweise ein Radaroder ein Lasersensor, mittels dem der Abstand sowie die Relativgeschwindigkeit des Objektes messbar ist. Aus der Kenntnis der eigenen Fahrzeuggeschwindigkeit lässt sich hieraus eine Absolutgeschwindigkeit des vorherfahrenden Fahrzeugs berechnen und in Abhängigkeit dieser Objektgeschwindigkeit vobj ein Mindestabstand bestimmen, der beispielsweise geschwindigkeitsabhängig ist, sowie eine Zielgeschwindigkeit vziel bestimmen, die das eigene Fahrzeug bei Erreichen des Mindestabstands zum erkannten Objekt erreicht haben sollte.

Gemäß der Erfindung ist ein Navigationssystem vorgesehen, das über eine Datenbank verfügt, in der Informationen über geschwindigkeitsbegrenzende Hindernisse abgelegt sein können. Dieses Navigationssystem umfasst weiterhin einen Empfänger zum Empfang von Signalen eines Satellitennavigationssystems, mit denen die Position des eigenen Fahrzeugs bestimmbar ist. Bei Kenntnis der momentanen Fahrzeugposition ist es möglich, mittels der Datenbank des Navigationssystems, in der die Straßen und weitere Zusatzinformationen wie Verkehrszeichen, Ampeln, Geschwindigkeitsbegrenzungen oder gefährliche Streckenabschnitte, bei denen eine Geschwindigkeitsreduktion notwendig ist, abgelegt sein können. Durch Vergleich der Istposition des eigenen Fahrzeugs und der Datenbank des Systems ist es möglich, vorausliegende Verkehrssituationen vorherzusehen und mit einem Vergleich der eigenen Fahrzeugzustände, wie beispielsweise der Fahrzeuggeschwindigkeit, dem Fahrer eine entsprechende Rückmeldung zu geben.

Vorteilhafter Weise wird zur Berechnung der benötigten, kinetischen Energie, die das Fahrzeug zum Erreichen eines, die eigene Fahrzeuggeschwindigkeit begrenzenden Hindernisses benötigt, der Abstand zu dem Hindernis, die Fahrzeuggeschwindigkeit bei Erreichen des Hindernisses, die Fahrzeugmasse und/oder ein einzuhaltender Mindestabstand berücksichtigt.

Weiterhin ist es vorteilhaft, dass die Rückstellkraft der Fahrpedaleinrichtung Null ist, wenn die im Fahrzeug gespeicherte, kinetische Energie nicht ausreicht, um das Fahrzeug dem Hindernis bis auf den Mindestabstand anzunähern. Durch die Reduktion der Rückstellkraft wird dem Fahrer signalisiert, dass eine Betätigung des Fahrpedals energetisch günstig ist, da die zur Beschleunigung benötigte Energie im weiteren Fahrverlauf sinnvoll verwendet werden kann.

Weiterhin ist es vorteilhaft, dass die Rückstellkraft der Fahrpedaleinrichtung umso größer ist, desto größer der Energieüberschuss der im Fahrzeug gespeicherten, kinetischen Energie gegenüber der benötigten, kinetischen Energie ist, die zum Erreichen des die eigene Fahrzeuggeschwindigkeit begrenzenden Hindernisses benötigt wird. Hierdurch wird dem Fahrer mittels einer erhöhten Rückstellkraft der Fahrpedaleinrichtung mitgeteilt, dass die Energie, die zu einer Beschleunigung des Fahrzeugs infolge der Fahrpedalbetätigung führt, im weiteren Fahrverlauf nicht sinnvoll umgesetzt werden kann, da im weiteren Fahrverlauf ein, die eigene Fahrzeuggeschwindigkeit begrenzendes Hindernis zu erwarten ist, das beispielsweise ein langsameres, vorherfahrendes Fahrzeug, eine Verkehrsampel, ein Stop-Schild oder eine Kreuzung sein kann.

Erfindungsgemäß ist das die eigene Fahrzeuggeschwindigkeit begrenzende Hindernis ein Objekt, das in einer Datenbank eines Navigationssystems gespeichert ist. Dieses Objekt, das in einer Datenbank eines Navigationssystems abrufbar ist, kann beispielsweise eine Information sein, dass dem unmittelbar bevorstehenden Fahrverlauf eine Ampelanlage, ein Stopp-Schild, eine Kreuzung oder eine scharfe Kurve zu erwarten ist, wodurch der Fahrer des Fahrzeugs die eigene Geschwindigkeit senken muss und überschüssige Energie des Kraftfahrzeugs, beispielsweise durch eine Verzögerung mittels der Bremseinrichtungen des Fahrzeugs, vernichten muss.

Vorteilhafter Weise wird für das, die eigene Fahrzeuggeschwindigkeit begrenzende Hindernis ein Mindestabstand, ein Hindernisabstand und eine Zielgeschwindigkeit ermittelt. Der Mindestabstand und/oder die Zielgeschwindigkeit des Hindernisses kann dabei vorteilhafter Weise aus der Art des bevorstehenden Hindernisobjektes sowie aus der Geschwindigkeit, mit der sich das Hindernis bewegt, ermittelt werden, indem dieses beispielsweise aus einer Tabelle abgerufen wird. Der Hindernisabstand kann mittels eines abstandsmessenden Objektdetektionssystems, das vorteilhafter Weise an der Front des Fahrzeugs angebracht ist, bestimmt werden, wie auch die Relativgeschwindigkeit des Hindernisses, falls es sich hierbei um ein vorherfahrendes Fahrzeug handelt.

Weiterhin ist es vorteilhaft, dass aus der momentanen Beschleunigungsänderung des Fahrzeugs ein Fahrwiderstand ermittelt wird und in Abhängigkeit des ermittelten Fahrwiderstandes, des Mindestabstands, des Hindernisabstands und der Zielgeschwindigkeit die kinetische Energie, die das Fahrzeug zum Erreichen des, die eigene Fahrzeuggeschwindigkeit begrenzenden Hindernisses benötigt, ermittelt wird.

Weiterhin ist es vorteilhaft, dass der Rückstellkraftermittlungseinrichtung ein Geschwindigkeitssignal eines Geschwindigkeitssensors zur Bestimmung der momentan im Fahrzeug gespeicherten kinetischen Energie zugeführt wird. Die Information über die Geschwindigkeit des eigenen Fahrzeugs ist für die Berechnung der im Fahrzeug gespeicherten, kinetischen Energie von Bedeutung, da der Großteil der kinetischen Energie im Fahrzeug durch die Kenntnis der Eigengeschwindigkeit des Fahrzeugs ermittelbar ist. Weiterhin kann die eigene Geschwindigkeit auch dazu benutzt werden, die Relativgeschwindigkeit von Objekten, die mittels des Objektdetektionssystems erkannt wurden, in eine Absolutgeschwindigkeit umzurechnen. Weiterhin ist es möglich, mittels der gemessenen Geschwindigkeit den Fahrwiderstand des eigenen Fahrzeugs zu bestimmen, indem der Differenzenquotient der Geschwindigkeit nach der Zeit zweier aufeinanderfolgender Messwerte gebildet wird und hieraus die momentane Beschleunigung des Fahrzeugs bestimmt wird und mittels einer Division der momentanen Fahrzeugbeschleunigung durch die geschätzte Fahrzeugmasse ein Fahrwiderstand ermittelbar ist.

Weiterhin ist es vorteilhaft, dass der Rückstellkraftermittlungseinrichtung Messwerte eines Objektdetektionssystems zuführbar sind, mittels denen die kinetische Energie, die das Fahrzeug zum Erreichen eines, die eigene Fahrzeuggeschwindigkeit begrenzenden Hindernisses benötigt, ermittelbar ist.

Vorteilhafter Weise sind der Rückstellkraftermittlungseinrichtung Informationen einer Datenbank eines Navigationssystems zuführbar, mittels denen die kinetische Energie, die das Fahrzeug zum Erreichen eines, die eigene Fahrzeuggeschwindigkeit begrenzenden Hindernisses benötigt, ermittelbar sind.

Von besonderer Bedeutung ist die Realisierung des erfindungsgemäßen Verfahrens in der Form eines Steuerelements, das für ein Steuergerät einer Rückstellkraftermittlungseinrichtung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read Only Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

Zeichnungen

Nachfolgend werden Ausführungsbeispiele der Erfindung anhand von Zeichnungen erläutert. Es zeigen

Figur 1     Fahrsituationen, in denen das erfindungsgemäße Verfahren vorteilhaft einsetzbar ist,
Figur 2     ein Blockschaltbild einer Ausführungsform der Erfindung,
Figur 3     mehrere Kennlinien, die zur Ermittlung der Rückstellkraft in Abhängigkeit der Energiedifferenz auswählbar sind und
Figur 4     ein Blockschaltbild einer Ausführungsform des Fahrpedalaktuators.

Beschreibung von Ausführungsbeispielen

In der oberen Hälfte der Figur ist eine Fahrsituation dargestellt, in der sich das eigene Fahrzeug 1 mit der Geschwindigkeit vist bewegt und das die Fahrzeugmasse mfzg aufweist. Dieses Fahrzeug nähert sich einem vorausfahrenden Objektfahrzeug 2, das mit einer langsameren Geschwindigkeit vobj unterwegs ist. Mittels eines Objektdetektionssystems kann der Abstand sowie die Geschwindigkeit des vorherfahrenden Fahrzeugs bestimmt werden und gemäß der Erfindung vorausberechnet werden, ob die im Fahrzeug 1 gespeicherte, kinetische Energie ausreicht, um sich dem Fahrzeug 2 anzunähern und ab einem bestimmten Mindestabstand dziel eine vorgegebene Zielgeschwindigkeit vziel, die vorteilhafter Weise der Objektgeschwindigkeit vobj entspricht, erfolgen kann. Der Mindestabstand dziel kann beispielsweise in Abhängigkeit der Art des Objekts und/oder in Abhängigkeit der Geschwindigkeit vobj des Objekts festgelegt sein. So ist es beispielsweise denkbar, dass der Mindestabstand dziel umso größer ist, je schneller sich das Objekt 2 bewegt. Der Abstand sziel, um den sich das eigene Fahrzeug 1 dem Objekt 2 nähern kann, ohne den Mindestabstand dziel zu unterschreiten, kann aus dem gemessenen Objektabstand zwischen den beiden Fahrzeugen aus einer Radar-, Laser- oder Ultraschallmessung oder mittels eines Videosensors gemessen werden und durch Abzug des Mindestabstands dziel ermittelt werden. Erfindungsgemäß wird die kinetische Energie des Fahrzeugs 1 ermittelt, sowie die Energie ermittelt, die nötig ist, um das eigene Fahrzeug 1 dem Objekt 2 bis auf den Mindestabstand dziel anzunähern und dem Objekt 2 ab dem Punkt 4 mit der Zielgeschwindigkeit, die vorteilhafter Weise gleich der Objektgeschwindigkeit ist, zu folgen. Durch Vergleich dieser beiden Energiewerte wird weiter bestimmt, ob die vorhandene, kinetische Energie des Fahrzeugs 1 ausreicht, um dieses bis auf den Mindestabstand dziel dem Objekt 2 anzunähern, oder ob der Fahrer des Fahrzeugs 1 weiterhin das Fahrpedal betätigen kann, ohne dass die hierdurch aufgebrachte Energie in einem späteren Verzögerungseingriff vernichtet werden muss. Dementsprechend wird die Rückstellkraft des Fahrpedals des Fahrzeugs 1 eingestellt.

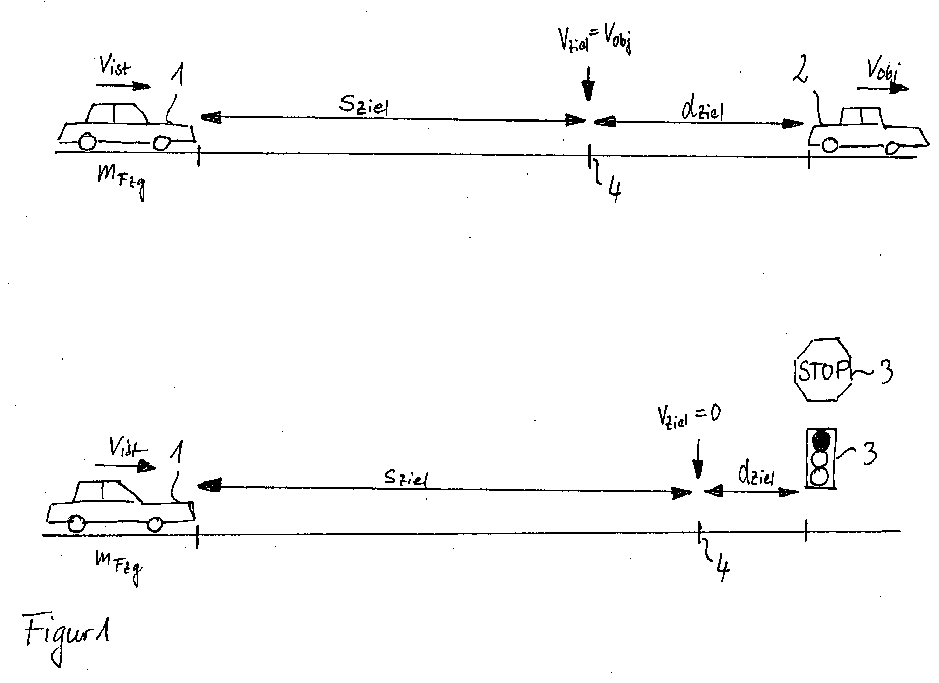

Im unteren Teil der Figur 1 ist eine ähnliche Fahrsituation dargestellt. Das eigene Fahrzeug 1 bewegt sich mit der Fahrzeugmasse mfzg und der Fahrzeuggeschwindigkeit vist. Über einen Videosensor, der zur Objektdetektion verwendet wird oder eine Datenbank eines Navigationssystems wird erkannt, dass sich eine Kreuzung mit einem Stopschild 3 oder eine Kreuzung mit einer Ampel 3 voraus befindet. Gemäß der Art dieses Hindernisses wird ein Mindestabstand dziel bestimmt, der im vorliegenden Beispiel kleiner ist, als der Mindestabstand dziel in der oberen Hälfte, wo einem vorausfahrenden Fahrzeug gefolgt werden soll. Da es sich im unteren Teil der Zeichnung um ein Hindernis handelt, das die zulässige Fahrzeuggeschwindigkeit auf die Zielgeschwindigkeit vziel = 0 km/h beschränkt, wird berechnet, welche Energie notwendig ist, um das Fahrzeug 1 über die Distanz sziel zu bewegen, die den Abstand zwischen dem Fahrzeug 1 und dem Hindernis 3 abzüglich des Mindestabstands dziel darstellt und bei erreichen des Punktes 4 eine Zielgeschwindigkeit von 0 km/h erreicht wird. Diese notwendige Energie wird mit der im Fahrzeug 1 gespeicherten, kinetischen Energie verglichen und dementsprechend die Rückstellkraft des Fahrpedals eingestellt. Weiterhin kann es vorgesehen sein, dass mittels des Navigationssystems Tempolimits erkannt werden und dem Fahrer mittels des Fahrpedalaktuators mitgeteilt wird, wann er das Fahrpedal nicht mehr betätigen muss, um zu Beginn der Geschwindigkeitsbegrenzung die vorgeschriebene Maximalgeschwindigkeit zu haben und einer Geschwindigkeitsübertretung vorzubeugen.

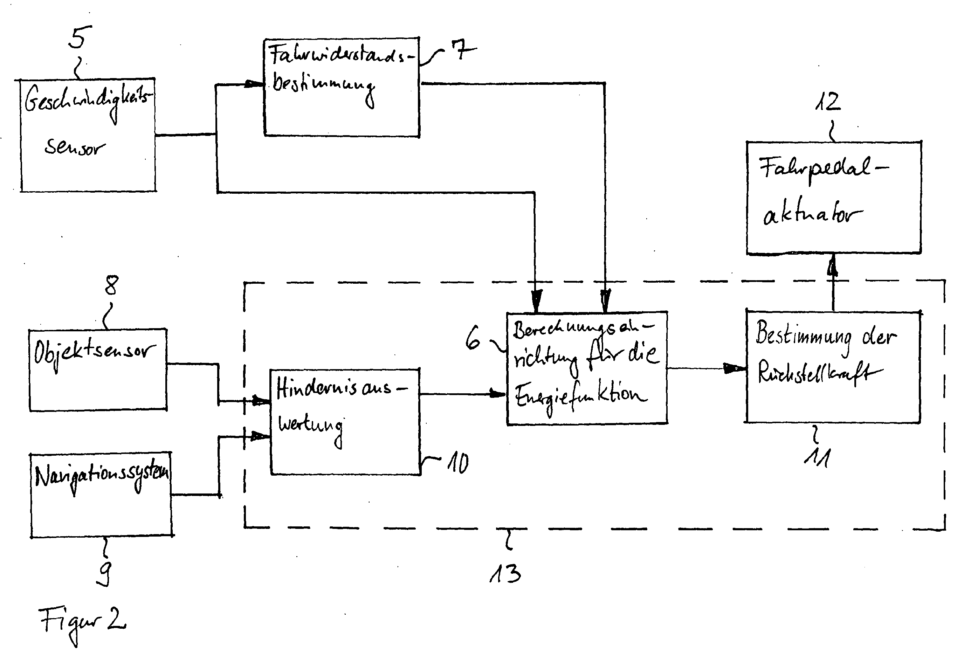

In Figur 2 ist ein Blockschaltbild dargestellt, das die Bestimmung der Rückstellkraft des Fahrpedals aufzeigt. Zu erkennen ist eine Rückstellkraftermittlungseinrichtung 13, die eine Hindernisauswertung 10, eine Berechnungseinrichtung für die Energiefunktion 6 sowie eine Ermittlungseinrichtung für die Rückstellkraft 11 aufweist. Die Fahrwiderstandsbestimmung 7 ist in Figur 2 außerhalb der Rückstellkraftermittlungseinrichtung 13 dargestellt, kann jedoch auch erfindungsgemäß innerhalb der Rückstellkraftermittlungseinrichtung 13, die beispielsweise durch ein eigenständiges Steuergerät oder als Teil eines bestehenden Steuergerätes ausgeführt sein kann, enthalten sein.. Ein Geschwindigkeitssensor 5 bestimmt die Geschwindigkeit vist des eigenen Fahrzeugs 1 und führt diese einer Berechnungseinrichtung für die Energiefunktion 6 zu. Weiterhin wird das Ausgangssignal vist des Geschwindigkeitssensors 5 einer Fahrwiderstandsbestimmung 7 zugeführt, in der der momentane Fahrwiderstand des Fahrzeugs 1 bestimmt wird. Hierzu wird die Geschwindigkeit vist des Fahrzeugs 1 nach der Zeit differenziert, indem beispielsweise zwei aufeinanderfolgende Geschwindigkeitswerte vist voneinander subtrahiert werden und durch die Zeitdauer, die zwischen der Messung der beiden Geschwindigkeitswerte verstrichen ist, geteilt wird. Hierdurch erhält man einen Beschleunigungswert afzg, der durch die Fahrzeugmasse mfzg dividiert werden kann, wodurch der momentane Fahrwiderstand Fw ermittelbar ist. Die Fahrzeugmasse mfzg kann hierzu beispielsweise im Steuergerät hinterlegt sein oder über weitere Sensoren, beispielsweise über Sensoren, die an den Fahrwerkselementen die Beladung feststellen können und die Beladung mit dem Leergewicht addieren, ermittelt werden. Der ermittelte Fahrwiderstand Fw, der von der Fahrwiderstandsbestimmung 7 ausgegeben wird, wird ebenfalls der Berechnungseinrichtung für die Energiefunktion 6 zugeführt. Alternativ ist es auch möglich, die Beschleunigung afzg des Fahrzeugs nicht über eine Differentiation der Geschwindigkeit vist zu ermitteln, sondern direkt aus einem Beschleunigungssensor, wie er beispielsweise für Fahrdynamikregelungen eingesetzt wird, übernommen werden. Zusätzlich werden der Berechnungseinrichtung für die Energiefunktion 6 Größen von einer Hindernisauswertung 10 zugeführt. Diese Größen sind vorteilhafter Weise die Zielgeschwindigkeit vziel, die das Fahrzeug 1 bei Erreichen des Mindestabstands dziel am Punkt 4, also im Mindestabstand dziel vom erkannten Hindernis 2, 3 noch haben soll. Weiterhin ist die Zielgeschwindigkeit vziel vorgesehen, die die Geschwindigkeit angeben soll, die das Fahrzeug 1 bei Erreichen des Punkts 4 haben soll. Weiterhin wird der Berechnungseinrichtung für die Energiefunktion 6 der Mindestabstand dziel zugeführt, den die Hindernisauswerteeinrichtung 10 aus der Art des Hindernisses sowie dessen Geschwindigkeit vobj bestimmt. Weiterhin wird der Berechnungseinrichtung für die Energiefunktion 6 der Abstand sziel zugeführt, um den sich das eigene Fahrzeug 1 dem Hindernis 2, 3 nähern kann, bis es die Zielgeschwindigkeit vziel erreicht haben muss. Dieser Abstand sziel ermittelt sich aus dem Abstand des eigenen Fahrzeugs 1 und dem erkannten Hindernis 2, 3 abzüglich des Mindestabstandes dziel. Die Hindernisauswerteeinrichtung 10 erhält Signale von einem Objektsensor 8, der das Fahrzeugumfeld, insbesondere das dem Fahrzeug 1 voraus befindliche Fahrzeugumfeld erfasst und darin befindliche Objekte, insbesondere langsamer fahrende Fahrzeuge 2 detektiert. Weiterhin erhält die Hindernisauswerteeinrichtung 10 Eingangssignale von einem Navigationssystem 9, das mittels eines Empfängers zur Satellitennavigation den momentanen Aufenthaltsort bestimmen kann und mittels einer Datenbank vorausbefindliche Kreuzungen sowie zusätzliche Informationen über Verkehrsschilder, Ampeln, scharfe Kurven oder Stopstellen bereitstellt. Der Objektsensor 8 ermittelt den Abstand sowie die Relativgeschwindigkeit der erkannten Objekte und deren Azimutwinkel bezüglich der eigenen Fahrachse und leitet diese an eine Hindernisauswertung 10 weiter. Hieraus kann in Abhängigkeit der Geschwindigkeit, unter Hinzunahme der Istgeschwindigkeit vist des eigenen Fahrzeugs ein Mindestabstand dziel berechnet werden, sowie der Abstand sziel berechnet werden. Weiterhin kann aus der Relativgeschwindigkeit vrel des erkannten Fahrzeugs sowie der Geschwindigkeit des eigenen Fahrzeugs vist eine Zielgeschwindigkeit vziel ermittelt werden, die das eigene Fahrzeug 1 bei Erreichen des Punkts 4 erreicht haben soll. Das Navigationssystem 9 führt der Hindernisauswertung 10 das nächste, bevorstehende Hindernis 3 zu, das gemäß der integrierten Datenbank erkannt wurde und beispielsweise eine Ampel, ein Verkehrszeichen, eine scharfe Kurve oder ein anderes, geschwindigkeitsbegrenzendes Hindernis darstellt. Aus der Art des Hindernisses kann eine Zielgeschwindigkeit vziel bestimmt werden, die beispielsweise im Falle eines Stop-Schilds oder einer roten Ampel zu vziel = 0 wählbar ist. Weiterhin wird ein Mindestabstand dziel bestimmt, in dem das Fahrzeug vor der Kreuzung angehalten werden soll. In analoger Weise, wie bereits beschrieben, wird aus dem gemessenen Abstand dziel+sziel und dem Mindestabstand dziel der Abstand sziel berechnet. Die Hindernisauswertung 10 ermittelt aus den ihr zugeführten Daten das nächstliegende Hindernis 2, 3 und gibt die hierfür relevanten Größen an die Berechnungseinrichtung für die Energiefunktion 6 weiter. In der Berechnungseinrichtung 6 wird mittels der momentanen Fahrzeuggeschwindigkeit vist sowie dem hinterlegten Fahrzeugmassewert mfzg die momentan im Fahrzeug gespeicherte kinetische Energie zu

$$E_{speicher} = \tfrac{1}{2} * mfzg * vist^2 \qquad\qquad (1)$$

berechnet. Weiterhin wird in der Berechnungseinrichtung 6 bestimmt, welche kinetische Energie ds Fahrzeug 1 bei Erreichen des Punkts 4 noch besitzen soll, indem die verbleibende Energie zu

$$E_{ziel} = \tfrac{1}{2} * mfzg * vziel^2 \qquad\qquad (2)$$

berechnet wird. Weiterhin wird in der Berechnungseinheit 6 ermittelt, welche Energie das Fahrzeug 1 durch den Fahrwiderstand Fw verliert, bis das Fahrzeug 1 den Mindestabstand dziel zum Hindernis 2, 3 erreicht hat. Diese Verlustenergie auf Grund des Fahrwiderstands berechnet sich zu

$$(3)$$

$$E_{widerstand} = \int_{0}^{sziel} Fw \cdot ds$$

und kann durch die Annahme, dass sich der Fahrwiderstand Fw nicht sehr schnell ändert, als konstant angenommen werden. Auf Grund dieser Vereinfachung ergibt sich die Verlustenergie in Folge des Fahrwiderstands zu

$$E = Fw * sziel \qquad\qquad (4)$$

Weiterhin bestimmt die Berechnungseinrichtung 6 aus den bestimmten Teilenergien die Gesamtenergie nach der Gleichung

$$E = \tfrac{1}{2} * mfzg * vist^2 - \tfrac{1}{2} * mfzg * vziel^2 - Fw * sziel, \qquad\qquad (5)$$

so dass der Wert E den Energieüberschuss angibt, den das Fahrzeug in Folge der gespeicherten, kinetischen Energie $E_{speicher}$ zum momentanen Zeitpunkt hat, abzüglich der Verlustenergie $E_{widerstand}$ in Folge des Fahrwiderstands Fw und der zu verbleibenden Restenergie in Folge der kinetischen Energie $E_{ziel}$ bei Erreichen der Zielgeschwindigkeit vziel bei Erreichen des Mindestabstands dziel zum Hindernis 2, 3. Ergibt sich ein Wert E > 0, so bedeutet dies, dass das Fahrzeug 1 mehr kinetische Energie gespeichert hat, als zum Erreichen des Punkts 4, also des Mindestabstands dziel bezüglich des Hindernisses 2, 3 nötig ist und dabei ohne zusätzliche Energiezufuhr die kinetische Zielenergie an Punkt 4 in Form der Geschwindigkeit vziel einstellen kann. In diesem Fall soll dem Fahrer mittels des Fahrpedals eine Rückstellkraft signalisieren, dass kein weiteres Gas geben sinnvoll ist, da diese Energie zum Erreichen der Zielgeschwindigkeit vziel am Punkt 4 ausreicht und zusätzliche Energie wieder durch einen Bremseneingriff vernichtet werden müsste. Ergibt sich in Folge der Gleichung Nr. 5 ein Wert von E < 0, so reicht die momentan im Fahrzeug 1 gespeicherte, kinetische Energie nicht aus, um das Fahrzeug bei Erreichen im Punkt 4 also des Mindestabstand dziel zum Hindernis 2, 3 mit der Zielgeschwindigkeit vziel zu betreiben, weshalb bei negativen E-Werten der Fahrer eine Fahrpedalbetätigung vornehmen kann, ohne dass diese Energie im weiteren Fahrverlauf vernichtet werden müsste. In diesem Fall soll dem Fahrer auch keine Rückstellkraft auf das Fahrpedal gegeben werden. Hierzu wird von der Berechnungseinrichtung 6 ein Wert, der die überschüssige Energie repräsentiert, an die Rückstellkraftbestimmungseinrichtung 11 weitergegeben, in der in Abhängigkeit der ermittelten E-Größe eine Rückstellkraft Fpedsoll bestimmt wird. Diese Zuordnung der Rückstellkraft Fpedsoll in Abhängigkeit des Energiewerts E kann beispielsweise mittels einer Kennlinie oder einer mathematischen Gleichung erfolgen. Die von der Rückstellkraftbestimmungseinrichtung 11 bestimmte Rückstellkraft Fpedsoll wird dem Fahrpedalaktuator 12 zugeleitet, der hieraus eine entsprechende Rückstellkraft Fpedist auf das Fahrpedal erzeugt.

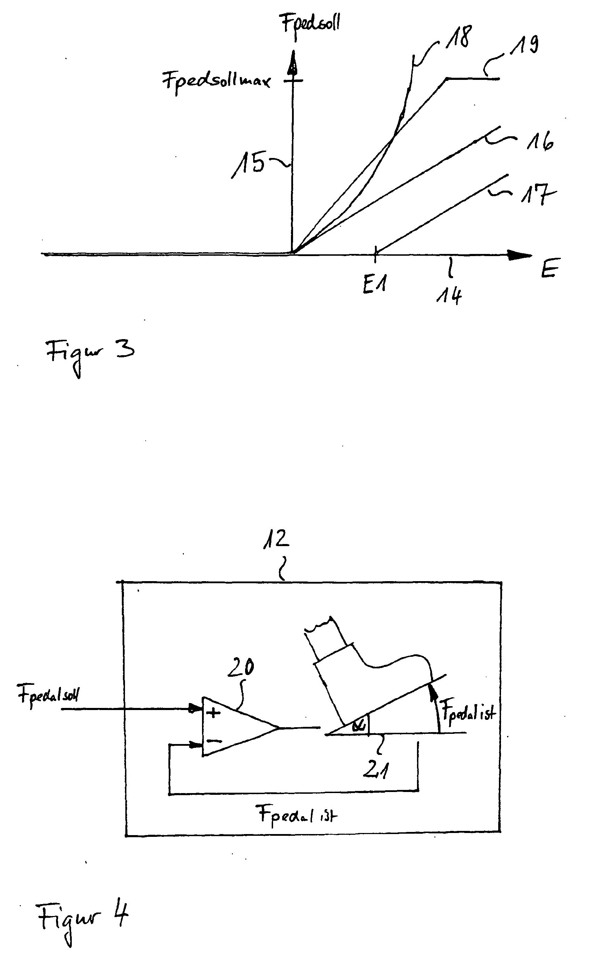

In Figur 3 sind mehrere, beispielhafte Kennlinien dargestellt, die eine Zuordnung der Rückstellkraft Fpedsoll in Abhängigkeit der überschüssigen Energie E bestimmen. In Figur 3 ist auf der Abszisse 14 der Energiewert E aufgetragen, der sowohl positive, als auch negative Werte annehmen kann. Auf der Ordinate 15 ist die Rückstellkraft Fpedsoll aufgetragen, mit der das aktive Fahrpedal gegen den Widerstand des Fahrerfußes gegendrückt. Da bei negativen Energiewerten E der Fahrer das Fahrpedal betätigen kann, ohne dass diese Energie unmittelbar darauf durch einen Bremseneingriff vernichtet werden muss, wird den negativen E-Werten eine Pedalrückstellkraft Fpedsoll = 0 zugeordnet. Bei positiven E-Werten wird erfindungsgemäß eine positive Rückstellkraft Fpedsoll bestimmt, die umso größer wird, je größer der Energieüberschuss der momentan im Fahrzeug gespeicherten Energie ist. Hierzu kann es beispielsweise vorgesehen sein, dass gemäß Kennlinie 16 eine Ursprungshalbgerade vorgesehen ist, die die Rückstellkraft Fpedsoll linear mit steigenden E-Werten zunehmen lässt. Weiterhin kann es gemäß Kennlinie 17 vorgesehen sein, dass die Rückstellkraft Fpedsoll ebenfalls linear mit positiven E-Werten korreliert ist, jedoch eine positive Rückstellkraft erst ab einem Mindestenergiewert E1 vorgesehen ist. Weiterhin kann es gemäß Kennlinie 18 auch möglich sein, die Rückstellkraft Fpedsoll quadratisch mit dem E-Wert ansteigen zu lassen, so dass bei einer übermäßigen Fahrpedalbetätigung ein besonders starker Rückstellkraftanstieg zu verzeichnen ist. Weiterhin kann es vorgesehen sein, dass gemäß Kennlinie 19 bei Erreichen einer maximalen Rückstellkraft Fpedsollmax eine maximale Pedalrückstellkraft erreicht wird, die auch bei weiter ansteigenden, positiven E-Werten nicht weiter erhöht wird.

In Figur 4 ist der Fahrpedalaktuator 12 dargestellt, der die Rückstellkraft Fpedsoll am aktiven Fahrpedal 21 erzeugt. Hierzu wird dem Fahrpedalaktuator 12 der Rückstellkraftwert Fpedsoll zugeführt, der von der Rückstellkraftbestimmungseinrichtung 11 ermittelt wurde. Der Rückstellkraftsollwert Fpedsoll wird einer Vergleichseinrichtung 20 zugeführt, der auch der tatsächliche, momentan anliegende Rückstellkraftwert Fpedist zugeführt wird. Das Ausgangssignal der Vergleichseinrichtung 20 wird dem aktiven Fahrpedal zugeführt, worauf dieses den Wert Fpedist entsprechend erhöht oder vermindert, so dass zu jedem Zeitpunkt der berechnete Pedalkraftsollwert Fpedsoll eingestellt wird. Weiterhin wird durch das aktive Fahrpedal 21 der momentane Fahrpedalwinkel $\alpha$ ermittelt und als Regelgröße einer Motorsteuerung zugeführt. Gegebenenfalls kann der Fahrpedalwinkel $\alpha$ auch dazu verwendet werden, die Fahrpedalrückstellkraft Fpedsoll zu beeinflussen und in Abhängigkeit des Fahrpedalwinkels $\alpha$ die Rückstellkraft zu erhöhen oder zu vermindern. Durch die Vergleichseinrichtung 20 wird gewährleistet, dass die tatsächliche Kraft Fpedist der vorgegebenen Rückstellkraftgröße Fpedsoll folgt.

## Patentansprüche

1. Verfahren zur Einstellung der auf eine Fahrpedaleinrichtung (21) eines Kraftfahrzeugs (1) wirkenden Rückstellkraft (Fpedaisoll), wobei die Einstellung in Abhängigkeit der momentan im Fahrzeug (1) gespeicherten kinetischen Energie und der berechneten, kinetischen Energie, die das Fahrzeug (1) zum Erreichen eines, die eigene Fahrzeuggeschwindigkeit begrenzenden Hindernisses (2,3) benötigt, und der Geschwindigkeit, die das Fahrzeug bei Erreichen des die eigene Fahrzeuggeschwindigkeit begrenzenden Hindernisses haben soll, ermittelt wird, **dadurch gekennzeichnet, dass** das, die eigene Fahrzeuggeschwindigkeit (vist) begrenzende Hindernis (2,3) ein Objekt ist, das in einer Datenbank eines Navigationssystems (9) gespeichert ist.

2. Verfahren nach Anspruch 1, **dadurch gekennzeichnet, dass** zur Berechnung der benötigten, kinetischen Energie, die das Fahrzeug (1) zum Erreichen eines, die eigene Fahrzeuggeschwindigkeit begrenzenden Hindernisses (2,3) benötigt, der Abstand (sziel+dziel) zu dem Hindernis, die Fahrzeuggeschwindigkeit (vziel) bei Erreichen des Hindernisses (2,3), die Fahrzeugmasse (mFzg) und/oder ein einzuhaltender Mindestabstand (dziel), berücksichtigt wird.

3. Verfahren nach einem der vorhergehenden Ansprüche, **dadurch gekennzeichnet, dass** die Rückstellkraft (Fpedalsoll) Null ist, wenn die im Fahrzeug (1) gespeicherte, kinetische Energie nicht ausreicht, um das Fahrzeug (1) dem Hindernis (2,3) bis auf den Mindestabstand (dziel) anzunähern.

4. Verfahren nach einem der vorhergehenden Ansprüche, **dadurch gekennzeichnet, dass** die Rückstellkraft (Fpedalsoll) umso größer ist, desto größer der Energieüberschuß der im Fahrzeug (1) gespeicherten, kinetischen Energie gegenüber der benötigten kinetischen Energie, die zum Erreichen des, die eigene Fahrzeuggeschwindigkeit (vist) begrenzenden Hindernisses (2,3) benötigt wird, ist.

5. Verfahren nach einem der vorhergehenden Ansprüche, **dadurch gekennzeichnet, dass** für das, die eigene Fahrzeuggeschwindigkeit (vist) begrenzende Hindernis (2,3) ein Mindestabstand (dziel), ein Hindernisabstand (sziel+dziel) und eine Zielgeschwindigkeit (vziel) ermittelt wird.

6. Verfahren nach Anspruch 5, **dadurch gekennzeichnet, dass** aus der momentanen Beschleunigungsänderung des Fahrzeugs ein Fahrwiderstand (Fw) ermittelt wird und in Abhängigkeit des ermittelten Fahrwiderstandes (Fw), des Mindestabstands (dziel), des Hindernisabstands (sziel+dziel) und der Zielgeschwindigkeit (vziel) die kinetische Energie, die das Fahrzeug zum Erreichen des, die eigene Fahrzeuggeschwindigkeit (vist) begrenzenden Hindernisses (2,3) benötigt, ermittelt wird.

7. Vorrichtung zur Einstellung der auf eine Fahrpedaleinrichtung eines Kraftfahrzeugs (1) wirkenden Rückstellkraft (Fpedalsoll), wobei eine Rückstellkraftermittlungseinrichtung (13) vorgesehen ist, die in Abhängigkeit der Differenz der momentan im Fahrzeug (1) gespeicherten kinetischen Energie und der berechneten, kinetischen Energie, die das Fahrzeug (1) zum Erreichen eines, die eigene Fahrzeuggeschwindigkeit (vist) begrenzenden Hindernisses (2,3) benötigt, und der Geschwindigkeit, die das Fahrzeug bei Erreichen des die eigene Fahrzeuggeschwindigkeit begrenzenden Hindernisses haben soll, eine Rückstellkraft (Fpedalsoll) ermittelt und ein, die Rückstellkraft (Fpedalsoll) repräsentierendes Signal an einen Fahrpedalaktuator (12) ausgibt, **dadurch gekennzeichnet, dass** der Rückstellkraftermittlungseinrichtung (13) Informationen einer Datenbank eines Navigationssystems (9) zuführbar sind, mittels denen die kinetische Energie, die das Fahrzeug (1) zum Erreichen eines, die eigene Fahrzeuggeschwindigkeit (vist) begrenzenden Hindernisses (2,3) benötigt, ermittelbar ist.

**8.** Vorrichtung nach Anspruch 7, **dadurch gekennzeichnet, dass** der Rückstellkraftermittiungseinrichtung (13) ein Geschwindigkeitssignal (vist) eines Geschwindigkeitssensors (5) zur Bestimmung der momentan im Fahrzeug gespeicherten kinetischen Energie zugeführt wird.

## Claims

**1.** Method for setting the return force (Fpedalsoll) which acts on an accelerator pedal device (21) of a motor vehicle (1), wherein the setting is determined as a function of the kinetic energy which is stored in the vehicle (1) at that particular time and of the calculated kinetic energy which the vehicle (1) requires to reach an obstacle (2, 3) which limits the vehicle's own speed, and as a function of the speed which the vehicle is to have when the obstacle which limits the vehicle's own speed is reached, **characterized in that** the obstacle (2, 3) which limits the vehicle's own speed (vist) is an object which is stored in a database of a navigation system (9).

**2.** Method according to Claim 1, **characterized in that** the distance (sziel+dziel) from the obstacle, the vehicle's speed (vziel) when the obstacle (2, 3) is reached, the vehicle mass (mFzg) and/or a minimum distance (dziel) which is to be maintained are taken into account in the calculation of the required kinetic energy which the vehicle (1) requires to reach an obstacle (2, 3) which limits the vehicle's own speed.

**3.** Method according to one of the preceding claims, **characterized in that** the return force (Fpedalsoll) is zero if the kinetic energy which is stored in the vehicle (1) is not sufficient to make the vehicle (1) approach the obstacle (2, 3) up to the minimum distance (dziel).

**4.** Method according to one of the preceding claims, **characterized in that** the return force (Fpedalsoll) is greater the greater the excess energy of the kinetic energy stored in the vehicle (1) compared to the required kinetic energy which is required to reach the obstacle (2, 3) which limits the vehicle's own speed (vist).

**5.** Method according to one of the preceding claims, **characterized in that** a minimum distance (dziel), a distance (sziel+dziel) from the obstacle and a target speed (vziel) are determined for the obstacle (2, 3) which limits the vehicle's own speed (vist).

**6.** Method according to Claim 5, **characterized in that** a travel resistance (Fw) is determined from the change in acceleration of the vehicle at that particular time and the kinetic energy which the vehicle requires to reach the obstacle (2, 3) which limits the vehicle's own speed (vist) is determined as a function of the determined travel resistance (Fw), the minimum distance (dziel), the distance (sziel+dziel) from the obstacle and the target speed (vziel).

**7.** Device for setting the return force (Fpedalsoll) which acts on an accelerator pedal device of a motor vehicle (1), wherein a device (13) for determining the return force is provided, which device (13) determines a return force (Fpedalsoll) as a function of the difference between the kinetic energy which is stored in the vehicle at that particular time (1) and the calculated kinetic energy which the vehicle (1) requires to reach an obstacle (2, 3) which limits the vehicle's own speed (vist), and as a function of the speed which the vehicle is to have when the obstacle which limits the vehicle's own speed is reached, and outputs a signal, which represents the return force (Fpedalsoll), to an accelerator pedal actuator (12), **characterized in that** information from a database of a navigation system (9) can be fed to the device (13) for determining the return force, by means of which information the kinetic energy which the vehicle (1) requires to reach an obstacle (2, 3) which limits the vehicle's own speed (vist) can be determined.

**8.** Device according to Claim 7, **characterized in that** a speed signal (vist) of a speed sensor (5) for determining the kinetic energy which is stored in the vehicle at that particular time is fed to the device (13) for determining the return force.

**Revendications**

1. Procédé de réglage de la force de rappel (Fpedalsoll) agissant sur une installation de pédale d'accélérateur (21) d'un véhicule automobile (1), selon lequel

   on détermine le réglage en fonction de l'énergie cinétique accumulée instantanément dans le véhicule (1) et de l'énergie cinétique calculée nécessaire au véhicule pour atteindre un obstacle (2, 3) limitant la vitesse propre du véhicule et la vitesse que doit avoir le véhicule lorsqu'il atteint l'obstacle limitant la vitesse propre du véhicule,

   **caractérisé en ce que**

   l'obstacle (2, 3) limitant la vitesse propre (vist), est un objet enregistré en mémoire dans une banque de données d'une système de navigation (9).

2. Procédé selon la revendication 1,

   **caractérisé en ce que**

   pour calculer l'énergie cinétique nécessaire qu'il faut au véhicule (1) pour atteindre un obstacle (2, 3) limitant la vitesse du véhicule, on tient compte de la distance (sziel+dziel) par rapport à l'obstacle, de la vitesse du véhicule (vziel) doit respecter en atteignant l'obstacle (2, 3), de la masse du véhicule (mFzg) et/ou d'une distance minimale (dziel) à respecter.

3. Procédé selon l'une des revendications précédentes,

   **caractérisé en ce que**

   la force de rappel (Fpedalsoll) est nulle si l'énergie cinétique stockée dans le véhicule (1) ne suffit pas pour rapprocher le véhicule (1) de l'obstacle (2, 3) jusqu'à la distance minimale (dziel).

4. Procédé selon l'une des revendications précédentes,

   **caractérisé en ce que**

   la force de rappel (Fpedalsoll) est d'autant plus grande que l'excédent d'énergie cinétique accumulé dans le véhicule (1) par rapport à l'énergie cinétique requise pour atteindre l'obstacle (2, 3) limitant la vitesse propre du véhicule (vist) est grand.

5. Procédé selon l'une des revendications précédentes,

   **caractérisé en ce que**

   pour l'obstacle (2, 3) limitant la vitesse propre du véhicule (vist) on détermine une distance minimale (dziel), une distance d'obstacle (sziel+dziel) et une vitesse cible (vziel).

6. Procédé selon la revendication 5,

   **caractérisé en ce qu'**

   à partir de la variation instantanée d'accélération du véhicule on détermine une résistance à l'avancement (Fw) et en fonction de cette résistance à l'avancement (Fw) on détermine la distance minimale (dziel), la distance par rapport à l'obstacle (sziel+dziel) et de la vitesse (vziel) on détermine l'énergie cinétique nécessitée par le véhicule pour atteindre l'obstacle (2, 3) limitant sa vitesse de déplacement propre (vist).

7. Dispositif de réglage de la force de rappel (Fpedalsoll) agissant sur une installation à pédale d'accélérateur d'un véhicule automobile (1), comprenant une installation de détermination de la force de rappel (13) qui, en fonction de la différence de l'énergie cinétique stockée instantanément dans le véhicule (1) et de l'énergie cinétique calculée, nécessaire au véhicule (1) pour atteindre un obstacle (2, 3) limitant la vitesse de déplacement propre (vist) du véhicule et la vitesse que le véhicule doit avoir lorsqu'il atteint l'obstacle limitant la vitesse propre du véhicule, consiste à déterminer une force de rappel (Fpedalsoll) et d'émettre une force de rappel (Fpedalsoll) représentée par un signal appliqué à l'actionneur (Fpedalsoll) (12),

   **caractérisé en ce que**

   l'installation de détermination de la force de rappel (13) reçoit des informations d'une banque de données d'un système de navigation (9) à l'aide desquelles elle détermine l'énergie cinétique nécessaire au véhicule (1) pour atteindre une vitesse propre (vist) du véhicule ou des obstacles adjacents (2, 3).

8. Dispositif selon la revendication 7,

   **caractérisé en ce que**

   l'installation de détermination de la force de rappel (13) reçoit un signal de vitesse (vist), d'un capteur de vitesse de rotation (5) pour déterminer l'énergie cinétique stockée instantanément dans le véhicule.

Figur 1

Figur 2

Figur 3

Figur 4

**EP 1 538 018 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19620929 A1

- US 6559762 B1